# EUROPEAN PATENT APPLICATION

(11) **EP 4 428 989 A1**
(43) Date of publication of application: **11.09.2024**
(21) Application number: 24161403.1
(22) Date of filing: 05.03.2024
(51) Int. Cl.: H01M 10/613, H01M 10/625, H01M 10/6556, H01M 10/6567, H01M 50/289

(54) **BATTERY ASSEMBLY FOR A MOTOR VEHICLE AND MOTOR VEHICLE COMPRISING THE SAME**

(30) Priority: 07.03.2023 IT 202300004119
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

A battery assembly (10; 10'; 10'') for a motor vehicle (1) is described comprising a plurality of batteries (11) electrically connected to one another and a support structure (12; 12'; 12'') which supports the batteries (11). The support structure (12; 12'; 12") comprises two or three support groups (13, 14; 13', 14'; 13'', 14", 15") distanced from each other along a first direction (Z), between which the batteries (11) are interposed along the first direction (Z). Each support group (13, 14; 13', 14'; 13", 14", 15") comprises one or more seats (16, 17) adapted to house at least partially the batteries (11) and at least one of the support groups (13, 14; 13', 14'; 13", 14", 15") comprises a chamber (18) adapted to be passed through by a refrigerating fluid and adjacent the one or more seats (16, 17) .

## Description

### CROSS-REFERENCE TO RELATED APPLICATIONS

This patent application claims priority from Italian patent application no. 102023000004119 filed on March 7, 2023, the entire disclosure of which is incorporated herein by reference.

### TECHNICAL FIELD

The present invention relates to a battery assembly for a motor vehicle and to a motor vehicle comprising a battery assembly.

### BACKGROUND

As is known, automobiles essentially comprise:
- a frame;
- a plurality of wheels rotatable with respect to the frame about respective rotational axes and adapted to move the frame with respect to the ground on which they rest;
- actuating means adapted to drive into rotation the wheels about the respective axes; and
- one or more batteries.

It is also known that the batteries which operate at temperatures near the room temperature are characterized by efficiencies greater than those of the batteries which operate at higher temperatures. In particular, the use on board the vehicle of efficient batteries allows reducing the portion of weight of the vehicle intended for storing the electric energy.

To such end, automobiles have been developed comprising systems for adjusting the temperature of the batteries. Specifically, in such known automobiles, the batteries are housed at a support structure which supports them and holds them in place and are cooled by cooling pipes of the aforementioned systems for adjusting the temperature.

However, the arrangement of the cooling pipes, of the batteries and of the support structure on board the known motor vehicles results to be complex and leaves room for improvements.

The need is thus felt in the sector to improve the known motor vehicles, with the aim to optimize the arrangement of the batteries, of the support structure and of the cooling ducts.

An object of the invention is to meet the need described above, preferably in a simple and reliable manner.

### DESCRIPTION OF THE INVENTION

The object is achieved by a battery assembly for a motor vehicle as defined in claim 1.

The dependent claims define particular embodiments of the invention.

### BRIEF DESCRIPTION OF THE DRAWINGS

In the following, an embodiment of the invention is described for a better understanding thereof by way of non-limiting example and with reference to the accompanying drawings, wherein:
- Figure 1 is a schematic side view of a motor vehicle according to the present invention;
- Figure 2 is a perspective view of a battery assembly according to a first embodiment of the present invention;
- Figure 3 is a perspective view of the battery assembly of Figure 2 with parts removed for clarity;
- Figure 4 is a section view according to plane IV-IV in Figure 2;
- Figure 4a is an exploded view of the battery assembly illustrated in Figures 2, 3 and 4 with parts removed for clarity;
- Figure 5 is a perspective view of a battery assembly according to a second embodiment of the present invention with a partial cutaway perspective view;
- Figure 6 is a perspective view of a battery assembly according to a third embodiment of the present invention;
- Figure 7 is a perspective section view of the battery assembly according to plane VII-VII in Figure 6; and
- Figure 8 is a perspective section view of the battery assembly according to plane VIII-VIII in Figure 7.

### EMBODIMENTS OF THE INVENTION

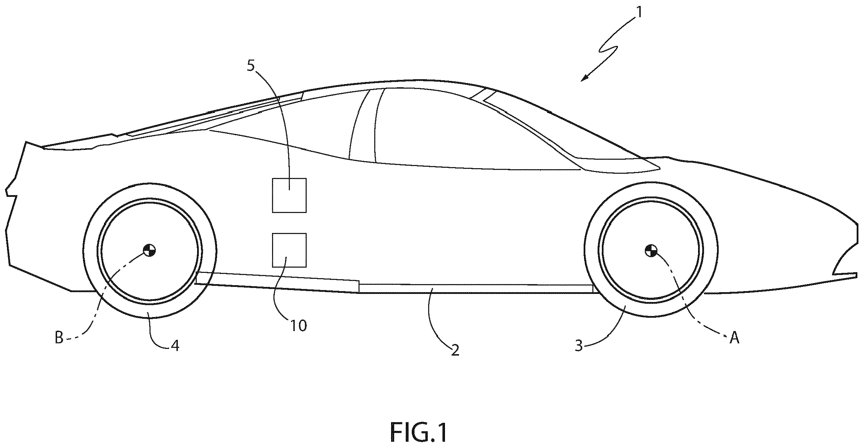

In Figure 1, reference numeral 1 is used to indicate, as a whole, a motor vehicle comprising:
- a frame 2;
- a plurality of wheels 3, 4 rotatable about respective rotational axes A, B with respect to the frame 2;
- actuating means 5 - illustrated only schematically - adapted to drive the wheels 3, 4 into rotation about the respective axes A, B; and
- a battery assembly 10.

Specifically, the actuating means 5 comprise an internal combustion engine and/or one or more electric motors and/or fuel cells.

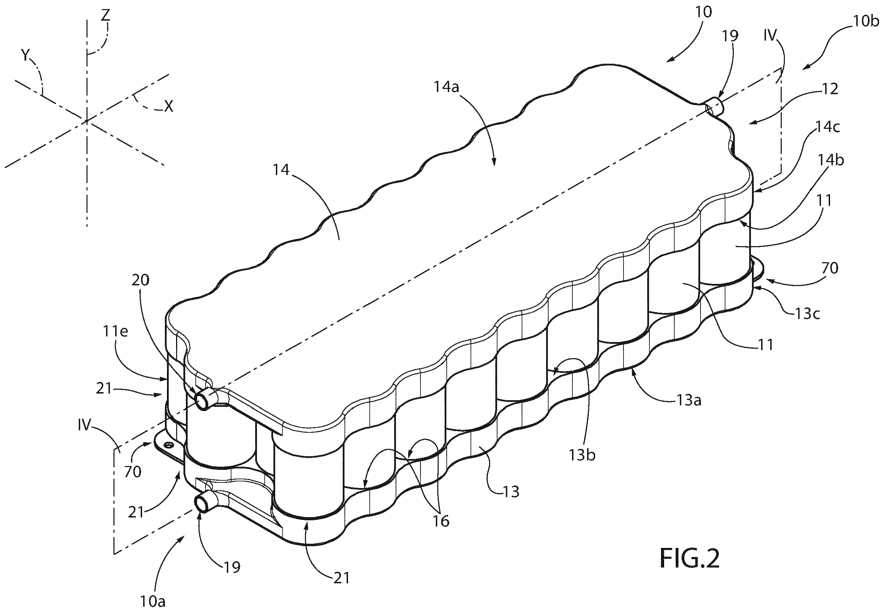

With reference to Figure 2, the battery assembly 10 comprises a plurality of batteries 11 electrically connected to one another and adapted to store electric energy on board the motor vehicle 1 and a support structure 12 adapted to support the batteries 11 and to hold them in place with respect to one another. The battery assembly 10 is elongated mainly along a direction X and defines two ends 10a, 10b opposite each other along such direction X.

The support structure 12 is fixed to the frame 2 and comprises, in turn, two support groups 13, 14 parallel to each other and distanced along a direction Z orthogonal to the direction X. The batteries 11 are interposed between such support groups 13, 14 along the direction Z.

The support group 13 is a body with a prismatic or substantially prismatic shape and comprises:
- a flat surface 13a, which is opposite the batteries 11, i.e. arranged on the opposite side of the support group 13 with respect to the batteries 11;
- a flat surface 13b, opposite the surface 13a along the direction Z and facing the support group 14; and
- a lateral surface 13c interposed between the surface 13a and the surface 13b along the direction Z.

The surface 13a further comprises fixing means 70 for fixing the support structure 12 to the frame 2 (Figure 2).

Similar to the support group 13, the support group 14 is a body with a prismatic or substantially prismatic shape comprising:
- a flat surface 14a opposite the batteries 11;
- a flat surface 14b opposite the surface 14a along the direction Z and facing the support group 13; and
- a lateral surface 14c interposed between the surface 14a and the surface 14b along the direction Z.

The batteries 11 are cylindrically shaped and each comprise two ends 11a, 11b opposite each other along the direction Z. Specifically, one of the poles of each battery 11 (for example, the positive pole) is arranged at the end 11a and the other one (for example, the negative pole) is arranged at the end 11b.

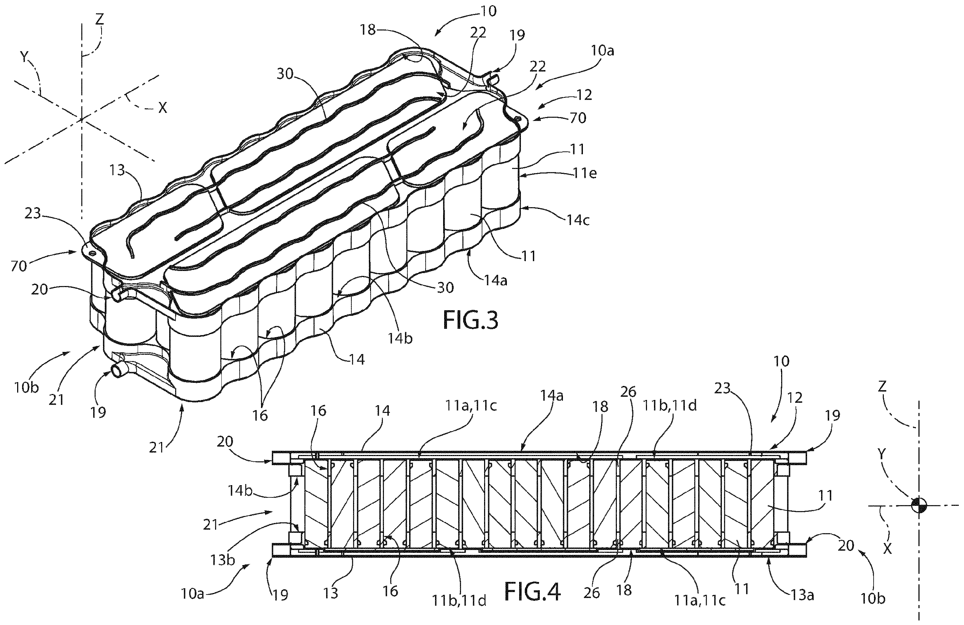

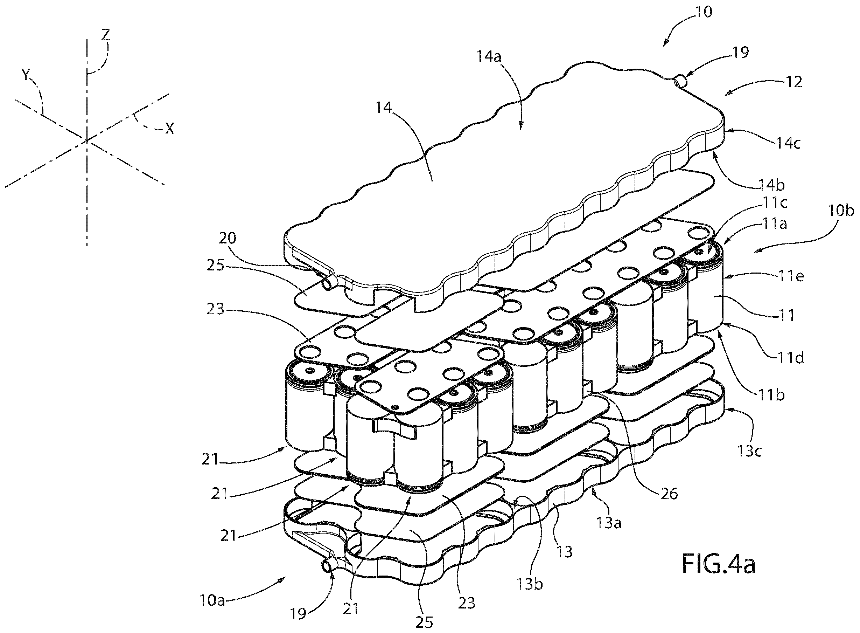

Specifically, the batteries 11 comprise (Figures 3 and 4) :
- a flat surface 11c orthogonal to the direction Z and arranged at the end 11a;
- a flat surface 11d orthogonal to the direction Z and arranged at the end 11b; and
- a cylindrical surface 11e interposed between the surfaces 11c and 11d along the direction Z.

Furthermore, the batteries 11 are preferably identical to one another and are lithium batteries.

In the illustrated embodiment, the batteries 11 are arranged along rows 21 directed parallel to the direction X. The rows 21 are distanced from one another along a direction Y orthogonal to the directions X and Z. More specifically, the batteries 11 of each row 21 are equally distant from the batteries 11 immediately adjacent in the same row along the direction X. In the illustrated non-limiting case, the battery assembly 10 comprises thirty-six batteries 11, divided into four rows 21 composed of nine batteries 11 each.

Advantageously, each support group 13, 14 comprises a plurality of seats 16 adapted to house at least partially the batteries 11 and a chamber 18 adapted to be passed through by a refrigerating fluid (Figure 4).

The chamber 18 of the support group 13 is at least partially interposed between the seats 16 of the support group 13 and the surface 13a along the direction Z. The chamber of the support group 14 is at least partially interposed between the seats 16 of the support group 14 and the surface 14a along the direction Z.

In the illustrated non-limiting embodiment, each support group 13, 14 comprises a flat plate 26, which comprises in turn the seats 16. Specifically, the seats 16 are through holes in plate 16 and having circular section perpendicular to the direction Z (Figures 4 and 4a).

The plates 26 are arranged outside the chamber 18 of the respective support groups 13, 14.

Specifically, the seats 16 of a same support group 13, 14 house at least partially a respective battery 11. Additionally, the number of seats 16 of the support group 13 is identical to the number of seats 16 of the support group 14 and to the number of batteries 11. Furthermore, the support groups 13 and 14 are preferably identical to each other.

Each battery 11 has one of the two ends 11a, 11b housed in the seat 16 of the support group 13 and the other one of the two ends 11b, 11a housed in the seat 16 of the support group 14. Additionally, proceeding parallel to the direction X along each row 21, the batteries 11 of each pair of batteries successive with respect to one another have opposite polarities.

Each support group 13, 14 also comprises (Figures 4 and 4a) :
- elements 23 for the electrical connection of the batteries 11. Specifically, the elements 23 comprise plates made of conductive material, for example copper, and are arranged outside the chamber 18 of the respective support group 13, 14;
- flat elements 25 interposed between the elements 23 and the surface 13a, 14a of the respective support group 13, 14 along the direction Z.

The elements 25 are distanced from the surface 13a, 14a of the respective support group 13, 14 along the direction Z and contribute to defining the internal volume of the chamber 18 of the respective support group 13, 14. Furthermore, the elements 25 are preferably placed in contact with the elements 23.

The chamber 18 of the support group 13 is thus delimited by the surface 13a, by the lateral surfaces 13c and by the elements 25 of the support group 13. The chamber 18 of the support group 14 is delimited by the surface 14a, by the lateral surfaces 14c and by the elements 25 of the support group 14.

Each chamber 18 further comprises an inlet opening 19 and an outlet opening 20 for the refrigerating fluid. Preferably, each inlet opening 19 and the relative outlet opening 20 are each arranged at a respective end 10a, 10b of the battery assembly 10. Additionally, the inlet opening 19 of the support group 13 is opposite the inlet opening 19 of the support group 14 along the direction X.

As is illustrated in Figure 3, each chamber 18 comprises a plurality of septi 30 adapted to guide the refrigerating fluid between the relative inlet opening 19 and the relative outlet opening 20. The septi 30 are dividing elements distanced from one another parallel to the direction Y and extending parallel to the direction X. The septi 30 divide the chamber 18 into a plurality of fluidic paths 22 adapted to be passed through by the refrigerating fluid. Preferably, the septi 30 extend along the entire extension of the respective chamber 18 parallel to the direction Z.

The support structure 12 is made of one or more structural materials. For example, the support structure 12 is made of metal and/or polymeric materials, for example, polyetheretherketone (PEEK).

In the following, the operation of the battery assembly 10 is described. In use, the refrigerating fluid passes through the chambers 18 of the support groups 13 and 14, absorbing the heat developed by the batteries 11. Simultaneously, the support groups 13, 14 exert the function of constraining the batteries 11. Specifically, while passing through the chambers 18, the refrigerating fluid is guided by the septi 30 and follows the fluidic paths 22. More specifically, the flowing of the refrigerating fluid along the chambers 18 of the support groups 13 and 14 occurs along respective directions opposite each other.

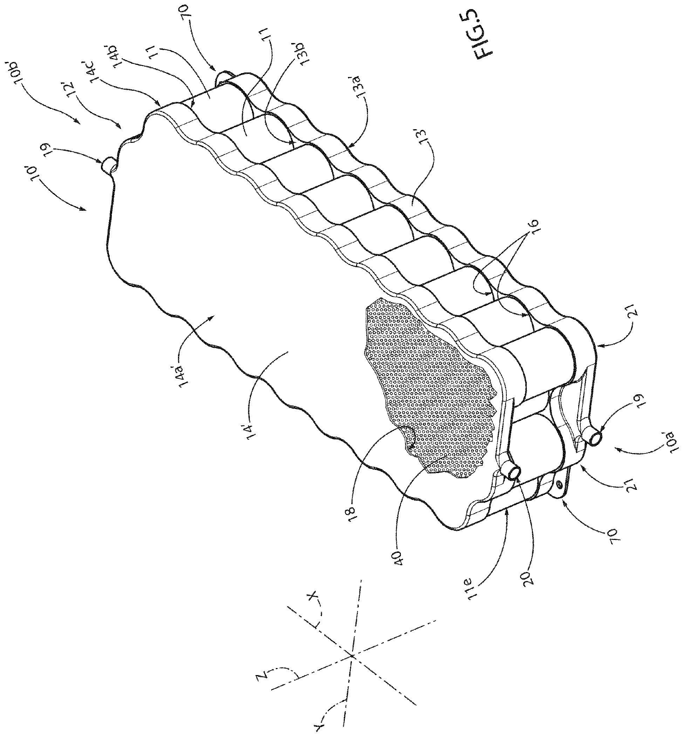

With reference to Figure 5, reference numeral 10' indicates a battery assembly according to a second embodiment of the invention. The battery assembly 10' is similar to the battery assembly 10 and will be described in the following only for what differs from the latter; identical or equivalent parts of the battery assemblies 10, 10' will be indicated, if possible, by the same reference numerals. The battery assembly 10' differs from the battery assembly 10 due to the fact of comprising a lattice structure 40 in the place of the septi 30 inside the chambers 18.

The lattice structure 40 is adapted to guide the refrigerating fluid between the inlet opening 19 of each chamber 18 and the relative outlet opening 20. Specifically, the lattice structure 40 is composed of structural elements (for example, trusses, gyroids, etc.) arranged in a repeated manner and defining a plurality of gaps between one another for the passing of the refrigerating fluid. Preferably, the lattice structure 40 extends along the entire space interposed parallel to the direction Z between each surface 13a', 14a' and the respective surface 13b', 14b' inside the respective chamber 18.

The lattice structure 40 is obtained by means of additive manufacturing and is made of metal and/or a polymeric material.

In use, the refrigerating fluid passes through the chambers 18 of the support groups 13' and 14', absorbing the heat developed by the batteries 11. Simultaneously, the support groups 13', 14' exert the function of constraining the batteries 11. Specifically, while passing through the chambers 18, the refrigerating fluid runs through the gaps present between the structural elements of the lattice structure 40. More specifically, the flowing of the refrigerating fluid along the chambers 18 of the support groups 13' and 14' occurs along respective directions opposite each other.

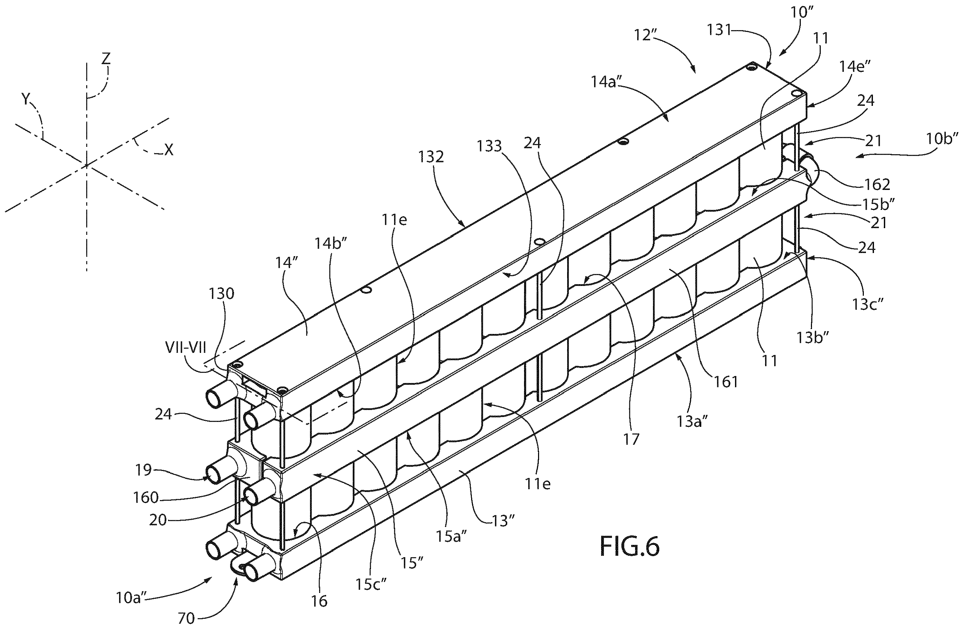

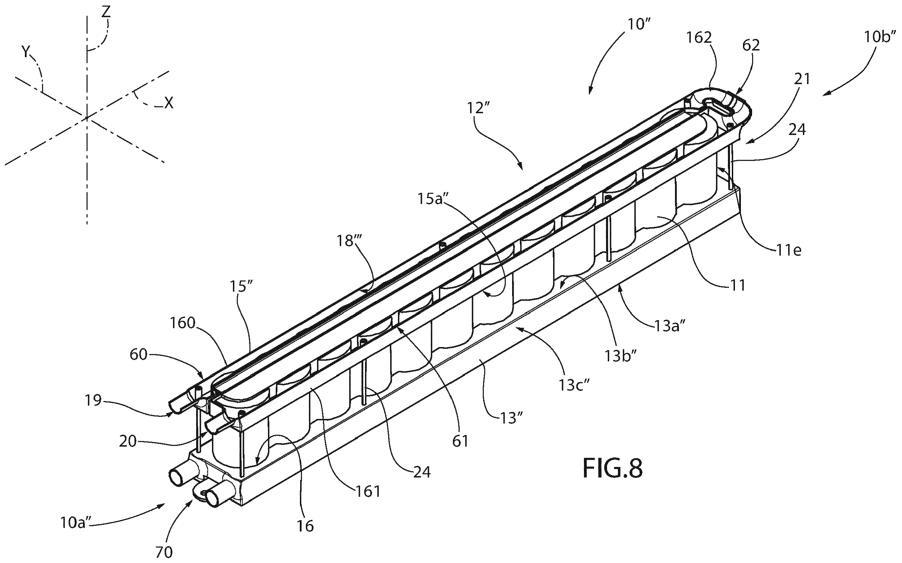

With reference to Figures 6, 7 and 8, reference numeral 10" indicates a battery assembly according to a third embodiment of the invention. The battery assembly 10" is similar to the battery assemblies 10, 10' and will be described in the following only for what differs from the latter; identical or equivalent parts of the battery assemblies 10, 10', 10" will be indicated, if possible, by the same reference numerals. The battery assembly 10" differs from the battery assemblies 10, 10' due to the fact of comprising three support groups 13", 14", 15" instead of two support groups.

Specifically, the support groups 13", 14" and 15" are aligned with and distanced from one another parallel to the direction Z. More specifically, the support group 15" is interposed between the support groups 13" and 14" along the direction Z and is preferably equally distant from them.

The battery assembly 10" comprises a first row 21 of batteries 11 interposed between the support groups 13" and 15" along the direction Z and a second row 21 of batteries 11 interposed between the support groups 15" and 14" along the direction Z.

The support groups 13" and 14" have a parallelepiped shape and each comprise (Figure 6):
- respective flat surfaces 13a", 14a" respectively opposite the first row 21 and the second row 21 of batteries 11;
- respective flat surfaces 13b", 14b", each opposite the relative surface 13a", 14a" along the direction Z and facing the support group 15"; and
- respective lateral surfaces 13c", 14c", each interposed between the relative surface 13a", 14a" and the relative surface 13b", 14b" along the direction Z.

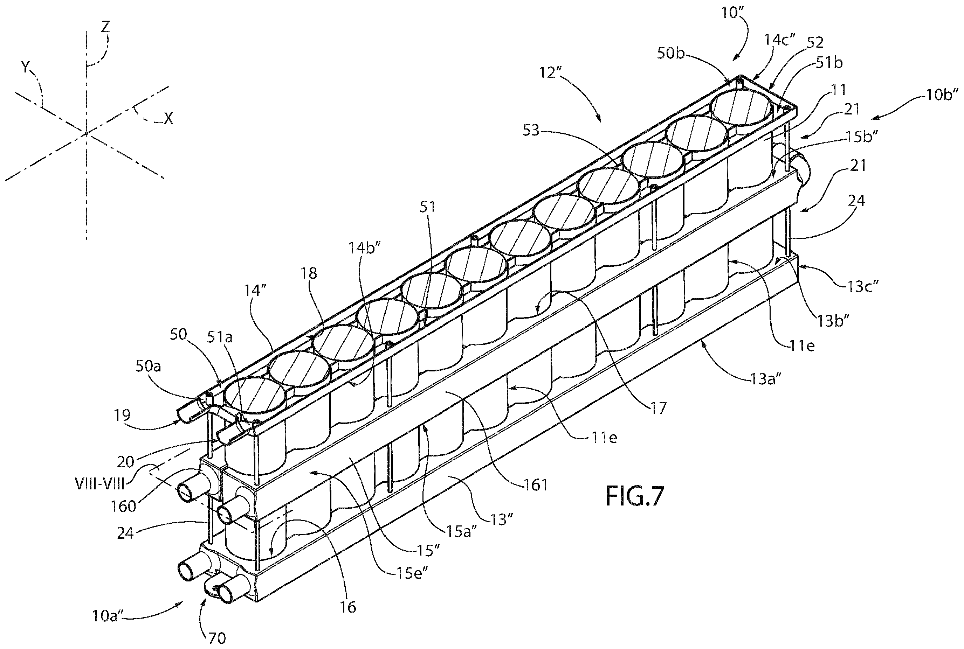

The inlet and outlet openings 19, 20 of the chambers 18 are aligned with each other along the direction Y. Furthermore, the chambers 18 of the support groups 13" and 14" each comprise (Figure 7):
- an input fluidic path 50 extending from the relative inlet opening 19 parallel to the direction X;
- an output fluidic path 51 extending from the relative outlet opening 20 and parallel to the fluidic path 50;
- a connection path 52, which fluidly connects the relative fluidic paths 50 and 51 and directed parallel to the direction Y; and
- a dividing septum 53 extending parallel to the direction X and interposed between the respective fluidic paths 50 and 51 parallel to the direction Y.

Specifically, each fluidic path 50 comprises two ends 50a, 50b opposite each other along the direction X and each fluidic path 51 comprises two ends 51a, 51b opposite each other along the direction X. More specifically, the ends 50a and 51a of each chamber 18 are arranged on the side of the end 10a and the ends 50b and 51b of each chamber 18 are arranged on the side of the end 10b. The connection path 52 of each chamber 18 fluidly connects the relative fluidic paths 50 and 51 at the respective ends 50b and 51b. In other words, the chambers 18 of the support groups 13" and 14" are U-shaped in a plane perpendicular to the direction Z (Figure 7).

More specifically, the lateral surface 14c" comprises, in turn (Figure 6):
- a flat wall 130, perpendicular to the direction X and arranged on the side of the end 10a;
- a flat wall 131, parallel to the wall 130 and arranged on the side of the end 10b; and
- two flat walls 132, 133, parallel to each other, orthogonal to the direction Y and interposed between the walls 130 and 131 parallel to the direction X.

As is illustrated in Figure 7, the inlet opening 19 and the outlet opening 20 of the support group 14" are arranged at the wall 130.

Additionally, the fluidic paths 50, 51 and 52 are delimited at the bottom by the surface 14b" and at the top by the surface 14a"; the fluidic path 50 is delimited on the side by the wall 132, part of the wall 130, by the dividing septum 53 and by the connection path 52; the fluidic path 51 is delimited on the side by the wall 133, part of the wall 130, by the dividing septum 53 and by the connection path 52; the connection path 52 is delimited on the side by the wall 131, part of the walls 132, 133 and by the fluidic paths 50 and 51.

The lateral surface 13c" is identical to the lateral surface 14c" and the fluidic paths 50, 51, 52 of the support group 13" are identical to the fluidic paths 50, 51, 52 of the support group 14", therefore their detailed description is omitted for brevity.

The support group 15'' has a parallelepiped shape and comprises (Figures 6 and 7):
- a flat surface 15a", facing the support group 13" and opposite the second row 21 of batteries 11 along the direction Z;
- a flat surface 15b", opposite the surface 15a" along the direction Z and facing the support group 14"; and
- a lateral surface 15c" interposed between the surface 15a" and the surface 15b" along the direction Z.

The support group 15" further comprises:
- a plurality of seats 16 on the side of the surface 15a";
- a plurality of seats 17 on the side of the surface 15b"; and
- a chamber 18 adapted to be passed through by a refrigerating fluid.

The chamber 18 of the support group 15" is at least partially interposed between the seats 16 and the surface 15b" and/or between the seats 17 and the surface 15a".

The seats 16 of the support group 15" are identical to the seats 16 of the support groups 13" and 14". Furthermore, the seats 17 are preferably identical to the seats 16. Additionally, the number of seats 16 of the support groups 13", 14" and 15" is identical to the number of seats 17.

More specifically, the support group 15" comprises:
- a body 160 comprising an inlet opening 19;
- a body 161 comprising an outlet opening 20 and adjacent and/or next to the body 160 parallel to the direction Y; and
- a body 162 extending between the bodies 160 and 161 parallel to the direction Y at the end 10b.

The bodies 160 and 161 define, as a whole, the surfaces 15a", 15b" and 15c" of the support group 15".

The body 160 further comprises an input fluidic path 60 extending from the inlet opening 19 of the support group 15" parallel to the direction X; the body 161 comprises an output fluidic path 61 extending from the outlet opening 20 of the support group 15" and parallel to the fluidic path 60; the body 162 comprises a connection path 62, which fluidly connects the fluidic paths 60 and 61. In other words, the fluidic paths 60, 61 and 62 have, as a whole, a U-shape in a plane perpendicular to the direction Z.

The battery assembly 10" also comprises columns 24 parallel to the direction Z and adapted to increase the structural efficiency of the support assembly 12". Specifically, the battery assembly 10' comprises some columns 24 interposed between the support groups 13" and 15" along the direction Z and some columns 24 interposed between the support groups 15" and 14'' along the direction Z (Figure 6) .

During the operation of the batteries 11, the refrigerating fluid passes through the chambers 18 of the support groups 13", 14" and 15", absorbing the heat developed by the batteries 11. Simultaneously, the support groups 13", 14", 15" exert the function of constraining the batteries 11.

Specifically, the refrigerating fluid enters the support groups 13", 14" through the respective inlet openings 19, flows along the respective fluidic paths 50, passes through the respective connection paths 52, flows along the respective fluidic paths 51 and comes out through the respective outlet openings 20. Simultaneously, the refrigerating fluid enters the support group 15" through the inlet opening 19, flows along the input fluidic path 60 inside the body 160, passes through the body 162, flows along the output fluidic path 61 inside the body 161 and comes out through the outlet opening 20.

Based on the foregoing, the advantages of the battery assembly 10; 10'; 10'' and of the motor vehicle 1 according to the invention are evident.

In particular, the support groups 13, 14; 13', 14'; 13'', 14", 15" comprise the seats 16, 17 for housing the batteries 11 and the chamber 18, which is passed through by the refrigerating fluid and placed in the proximity of the seats 16, 17. Consequently, the support groups 13, 14; 13', 14'; 13", 14", 15" simultaneously exert a structural function and a heat exchange function. The overall number of components necessary for supporting and cooling the batteries 11 is thus reduced and the arrangement of such components results to be simplified and compact with respect to the known motor vehicles discussed in the introductory part of the present description.

Since the ends 11a, 11b of the batteries 11 are housed at the seats 16, 17, which are lapped by the refrigerating fluid from the inside of the chambers 18, the batteries 11 are refrigerated in an efficient manner during the use.

Owing to the fact that the chamber 18 comprises the septi 30, or the lattice structure 40, the refrigerating fluid can be guided in an accurate manner between the inlet opening 19 and the outlet opening 20. This allows assuring the optimal cooling of all the batteries 11 of the battery assembly 10, 10', i.e. limiting the risk for some batteries 11 to be cooled in a sensibly different manner than the others. Moreover, the lattice structure 40 increases the mechanical resistance of the support groups 13', 14'.

Since the inlet and outlet openings 19, 20 of the chamber 18 of one of the two support groups 13, 14; 13', 14' are arranged in a manner counterposed to the inlet and outlet openings 19, 20 of the chamber 18 of the other one of the two support groups 13, 14; 13', 14', the flows of refrigerating fluid in the two chambers 18 are countercurrent. Consequently, the average temperature of the batteries 11 is constant or substantially constant along the direction X.

Since the chambers 18 of the battery assembly 10" comprise respective input fluidic paths 50; 60, output fluidic paths 51; 61 and connection fluidic paths 52; 62 having, as a whole, a U-shape, the average temperature of the batteries 11 is constant along the direction X.

Finally, it is clear that modifications and variations can be made to the battery assembly 10; 10'; 10" and to the motor vehicle 1 according to the invention, which do not anyway depart from the scope of protection defined by the claims.

In particular, the motor vehicle 1 could comprise more than one battery assembly 10; 10'; 10".

The support groups 13, 14; 13', 14'; 13", 14'', 15" could each comprise more than one chamber 18.

The batteries 11 could have a shape different from the cylindrical one. For example, the batteries 11 could have a parallelepiped or cubic shape.

The battery assembly could comprise one or more support groups 13, 14 and/or one or more support groups 13', 14' and/or one or more support groups 13", 14'' and/or one or more support groups 15'' . For example, the battery assembly could simultaneously comprise a chamber 18 comprising the septi 30 and a chamber 18 comprising the lattice structure 40. Alternatively or additionally, the battery assembly could comprise a support group devoid of the chamber 18.

The chambers 18 of the support groups 13'', 14", 15" could comprise septi 30 and/or the lattice structure 40.

The battery assembly 10'' could comprise more than two rows of batteries 21 superimposed with respect to one another parallel to the direction Z.

According to an embodiment not illustrated, the chambers 18 could at least partially extend between the seats 16, 17 along the directions X and Y.

## Claims

1. Battery assembly (10; 10'; 10'') for a motor vehicle (1) comprising:
- a plurality of batteries (11) electrically connected to one another;
- a support structure (12; 12'; 12") adapted to support said batteries (11);
said support structure (12; 12'; 12") comprising at least two support groups (13, 14; 13', 14'; 13", 14", 15") distanced from each other along a first direction (Z); said batteries (11) being interposed between said at least two support groups (13, 14; 13', 14'; 13", 14", 15") along said first direction (Z);
each said support group (13, 14; 13', 14'; 13", 14'', 15") comprising:
- at least one seat (16, 17) adapted to house at least partially said batteries (11); and
- at least one surface (13a, 14a; 13a', 14a'; 13a'', 14a'', 15a", 15b") opposite said batteries (11) along said first direction (Z);
at least one said support group (13, 14; 13', 14'; 13'', 14", 15") further comprising a chamber (18) adapted to be passed through by a refrigerating fluid and at least partially interposed between said at least one seat (16, 17) and said at least one surface (13a, 14a; 13a', 14a'; 13a'', 14a", 15a", 15b") along said first direction (Z);
**characterized in that** each said chamber (18) comprises an inlet opening (19) and an outlet opening (20) for said refrigerating fluid; said battery assembly (10; 10'; 10") further defining a second direction (X) orthogonal to said first direction (Z) and a third direction (Y) orthogonal to said first direction (Z) and to said second direction (X).
wherein at least one said chamber (18) comprises a plurality of septi (30) adapted to guide, in use, said refrigerating fluid between said inlet opening (19) and said outlet opening (20); and/or
wherein at least one said chamber (18) comprises a lattice structure (40) adapted to guide, in use, said refrigerating fluid between said inlet opening (19) and said outlet opening (20).

2. Battery assembly according to claim 1, **characterized in that** each said battery (11) comprises two ends (11a, 11b) opposite each other along said first direction (Z);
wherein one of the two ends (11a, 11b) of said batteries (11) is housed in said at least one seat (16) of one of the two said support groups (13, 14; 13', 14') and the other one of said two ends (11a, 11b) is housed in said at least one seat (16) of the other one of the two said support groups (13, 14; 13', 14').

3. Battery assembly according to claim 1, **characterized in that** each said battery (11) comprises a first end (11a) and a second end (11b) opposite each other along said first direction (Z);
said support structure (12") comprising three said support groups (13", 14", 15") distanced from one another along said first direction (Z);
wherein a first set of said batteries (11) is interposed between a first support group (13'') and a second support group (15'') of said three support groups (13", 14", 15") along said first direction (Z);
wherein a second set of said batteries (11) is interposed between the second support group (15") and a third support group (14") of said three support groups (13", 14", 15") along said first direction (Z);
wherein one of the two ends (11a, 11b) of the batteries (11) of said first set is housed in said at least one seat (16, 17) of the first support group (13") or the second support group (15") and the other one of said two ends (11a, 11b) of the batteries (11) of said first set is housed in said at least one seat (16, 17) of the other one of the first support group and the second support group (13", 15");
wherein one of the two ends (11a, 11b) of the batteries (11) of said second set is housed in said at least one seat (16, 17) of the second support group (15") or the third support group (14") and the other one of said two ends (11a, 11b) of the batteries (11) of said second set is housed in said at least one seat (16, 17) of the other one of the second support group and the third support group (15", 14").

4. Battery assembly according to claim 2, **characterized in that** it comprises a first end (10a) and a second end (10b) opposite one another along said second direction (X);
wherein said inlet opening (19) and said outlet opening (20) of said chamber (18) of one of the two said support groups (13, 14; 13', 14') are arranged respectively on the side of said first end (10a) and said second end (10b);
wherein said inlet opening (19) and said outlet opening (20) of said chamber (18) of the other one of the two said support groups (13, 14; 13', 14') are arranged respectively on the side of said second end (10b) and said first end (10a) .

5. Battery assembly according to any one of the foregoing claims, **characterized in that** said inlet opening (19) of at least one said chamber (18) is aligned with said outlet opening (20) of the same said chamber (18) parallel to said third direction (Y) and said chamber (18) comprises:
- an input fluidic path (50; 60) extending from the relative said inlet opening (19) parallel to said second direction (X);
- an output fluidic path (51; 61) extending from the relative said outlet opening (20) and parallel to said input fluidic path (50; 60); and
- a connection path (52; 62), which fluidly connects said input and output fluidic paths (50, 51; 60, 61) and directed parallel to said third direction (Y).

6. Battery assembly according to any one of the foregoing claims, wherein said batteries (11) are cylindrically shaped and identical to one another.

7. Battery assembly according to any one of the foregoing claims, **characterized in that** said support structure (12; 12'; 12") comprises fixing means (70) to a frame (2) of said motor vehicle (1).

8. Motor vehicle comprising:
- a frame (2);
- a plurality of wheels (3, 4) rotatable about respective rotational axes (A, B) relative to said frame (2) ;
- a battery assembly (10) according to any one of the foregoing claims; said support structure (12; 12'; 12") being fixed to said frame (2).
